# FASCICULE DE BREVET EUROPEEN

(11) **EP 3 272 617 B1**
(45) Date de publication et mention de la délivrance du brevet: **26.02.2020**
(21) Numéro de dépôt: 17179259.1
(22) Date de dépôt: 03.07.2017
(51) Int. Cl.: B61D 45/00, B61D 37/00, B60R 5/00

(54) **BAGAGE ET ENSEMBLE D'UN BAGAGE ET D'UNE BORNE DE FIXATION**
GEPÄCK UND ANORDUNG AUS GEPÄCK UND EINER BEFESTIGUNGSKLEMME
PIECE OF LUGGAGE AND ASSEMBLY OF A PIECE OF LUGGAGE AND A FASTENING TERMINAL

(30) Priorité: 21.07.2016 FR 1656936
(43) Date de publication de la demande: 24.01.2018
(73) Titulaire: SNCF Mobilités, 93200 Saint-Denis (FR)
(72) Inventeur: OPIGEZ, Jérôme, 59190 Hazebrouck (FR); CAUTERMAN, Olivier, 59120 Loos (FR)
(74) Mandataire: Argyma

(56) Documents cités:
- WO-A1-2012/152911
- DE-A1- 3 110 980
- DE-A1-102014 205 848
- FR-A1- 2 983 801

## Description

### DOMAINE TECHNIQUE GENERAL ET ART ANTERIEUR

La présente invention concerne le domaine des bagages et vise à empêcher le vol de bagages, en particulier, dans un lieu de transport (gare, aéroport, etc.) ou un véhicule de transport (train, avion, bus, bateau, etc.).

De manière classique, lors d'un déplacement en véhicule ferroviaire, un voyageur est équipé d'un bagage dans lequel sont stockées ses affaires. En pratique, le voyageur est assis sur un siège tandis que son bagage est rangé dans un compartiment à bagages qui peut être proche ou éloigné de son siège.

Afin d'éviter le vol du contenu de son bagage, il est connu de prévoir un cadenas pour verrouiller l'accès au bagage. Cependant, un tel cadenas ne permet pas d'empêcher le vol du bagage en tant que tel. Aussi, un voyageur cherche généralement à ranger son bagage à proximité de son siège dans le véhicule ferroviaire afin de pouvoir le surveiller visuellement et ainsi éviter le vol de ce dernier. Dans les faits, il n'est pas toujours possible pour le voyageur de ranger son bagage à proximité, notamment lorsque les compartiments à bagages à proximité de son siège sont déjà occupés.

Une solution immédiate pour éviter un vol consiste à attacher le bagage à la structure du véhicule ferroviaire, notamment avec une élingue métallique. Sans parler des difficultés de mises en oeuvre, une telle solution présente des inconvénients sur le plan de la responsabilité. En effet, si l'élingue est mise à la disposition du voyageur par la société de transport ferroviaire, la maintenance et la défaillance de l'élingue sont sous la responsabilité de la société de transport, ce qui est un inconvénient majeur et présente un frein au développement d'une telle solution.

Le document WO2012/152911 A1 décrit un dispositif de bagage pour un coffre de voiture comportant une boucle et des moyens élastiques de blocage.

L'invention a donc pour but de remédier à ces inconvénients en proposant une solution simple, fiable et efficace pour sécuriser un bagage contre le vol.

Bien que l'invention soit née à l'origine dans un véhicule ferroviaire, l'invention s'applique à tout véhicule de transport et à tout lieu de transport.

### PRESENTATION GENERALE DE L'INVENTION

L'invention concerne un bagage comprenant au moins un espace de rangement, un mécanisme d'ouverture/fermeture permettant d'accéder audit espace de rangement et un organe de fixation, dit deuxième organe de fixation, adapté pour coopérer avec un organe de fixation, dit premier organe de fixation, d'une borne de fixation, le deuxième organe de fixation comprenant des moyens d'ancrage actif adaptés pour coopérer avec les moyens de blocage passif du premier organe de fixation de la borne de fixation.

Par passif/actif, on entend que seule une action des moyens d'ancrage actif du bagage permet un verrouillage avec les moyens de blocage qui demeurent passifs. Ainsi, seule la responsabilité du voyageur est engagée lorsqu'il dépose son bagage étant donné que c'est lui qui possède les moyens permettant le verrouillage.

Ainsi, il suffit à un voyageur d'agir sur les moyens d'ancrage afin que ceux-ci s'ancrent sur les moyens de blocage de la borne. Autrement dit, le bagage dispose, de manière interne, de son propre système antivol.

De préférence, le deuxième organe de fixation se présente sous la forme d'un logement définissant une cavité d'emboitement. Le bagage ne comporte ainsi pas de partie en saillie susceptible de blesser quelqu'un.

De manière préférée, les moyens d'ancrage comportent au moins un organe d'ancrage apte à se déplacer dans ladite cavité. Ainsi, les moyens d'ancrage peuvent être activés localement dans la cavité, ce qui évite que l'organe d'ancrage ne blesse ou n'endommage un équipement. L'organe d'ancrage est ainsi protégé lorsqu'il est déployé.

De préférence, l'organe d'ancrage se déplace dans la cavité par rotation. De préférence encore, un tel organe d'ancrage comprend un loquet. De manière préférée, le loquet est monté rotatif.

Selon un autre aspect de l'invention, les moyens d'ancrage sont configurés pour réaliser un ancrage magnétique.

De préférence, les moyens d'ancrage comportent au moins une boucle adaptée pour être passée autour du premier organe de fixation de la borne de fixation. Ainsi, le bagage peut être aisément relié à la borne afin de le sécuriser. De manière préférée, la boucle se présente sous la forme d'une élingue, une chaîne ou un câble.

Selon un aspect préféré, le deuxième organe de fixation est situé sur une face inférieure du bagage. Ainsi, l'emboitement est facilité lorsque le bagage comporte une poignée sur une face supérieure. En outre, cela permet d'obtenir une surface inférieure d'appui plane si le deuxième organe de fixation se présente sous la forme d'un logement, le bagage étant alors stable.

De manière préférée, le bagage comporte un actionneur de commande configuré pour commander les moyens d'ancrage. Un tel actionneur de commande permet de commander à distance les moyens d'ancrage. De préférence, l'actionneur de commande et les moyens d'ancrage sont situés sur des faces différentes du bagage.

De manière préférée, l'actionneur de commande et les moyens d'ancrage sont reliés mécaniquement, de préférence, via un axe rotatif.

De préférence, lorsque les moyens d'ancrage comportent une boucle, l'actionneur de commande est configuré pour modifier la circonférence de la boucle de manière à permettre son serrage/desserrage autour du premier organe de fixation de la borne de fixation.

De préférence, l'actionneur de commande est configuré pour verrouiller le mécanisme d'ouverture/fermeture. Autrement dit, l'actionneur de commande remplit avantageusement une double fonction. Il permet, d'une part, d'assurer une fixation à la borne et, d'autre part, de verrouiller l'ouverture du bagage. Le voyageur est ainsi rassuré sur le fait qu'aucun objet ne sera dérobé dans le bagage et que le bagage, lui-même, ne sera pas volé.

L'invention vise également un ensemble comprenant au moins une borne de fixation et un bagage, en particulier pour un véhicule de transport, comprenant un premier organe de fixation, monté solidairement à un élément fixe et adapté pour coopérer avec un deuxième organe de fixation d'un bagage, ledit premier organe de fixation comprenant des moyens de blocage passif adaptés pour coopérer avec un des moyens d'ancrage actif du deuxième organe de fixation du bagage et au moins un bagage tel que présentés précédemment.

De préférence, le premier organe de fixation est adapté pour coopérer par emboîtement avec un deuxième organe de fixation d'un bagage. De manière avantageuse, une telle borne de fixation permet de fixer un bagage de manière stable lors de l'emboitement.

De manière préférée, le premier organe de fixation est rétractable de manière à permettre son escamotage dans ledit élément fixe.

De préférence, les moyens de blocage passif comportent au moins un orifice de fixation, de préférence, traversant. Un tel orifice permet avantageusement de former un point d'ancrage pour les moyens d'ancrage du bagage.

De préférence encore, le premier organe de fixation s'étend en saillie, de préférence, de manière horizontale ou verticale. Un tel relief permet de faciliter un emboîtement du bagage. Un relief vertical permet avantageusement au voyageur de déposer par gravité son bagage.

De manière préférée, le premier organe de fixation comporte des moyens de libération configurés pour empêcher l'action des moyens de blocage passif de manière à permettre le retrait d'un bagage verrouillé sur une borne. De préférence, les moyens de libération se présentent sous la forme d'une paire de mâchoires articulées adaptées pour s'ouvrir.

Selon un aspect n'appartenant pas à l'invention, il est présenté un ensemble d'une pluralité de bornes telles que présentées précédemment et d'un module de déverrouillage adapté pour activer les moyens de libération desdites bornes. Le module de déverrouillage permet de libérer de manière centralisée tous les bagages fixés auxdites bornes. Un tel module de déverrouillage permet avantageusement, à l'exploitant du parc de bornes de fixation, de retirer les bagages en cas d'urgence.

Selon un aspect n'appartenant pas à l'invention, il est présenté un véhicule de transport, en particulier un véhicule ferroviaire, comportant une pluralité de bornes de fixation telles que présentées précédemment.

Selon un aspect n'appartenant pas à l'invention, il est présenté un lieu de transport, en particulier une gare ferroviaire, comportant une pluralité de bornes de fixation telles que présentées précédemment.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue schématique d'une première forme de réalisation d'une borne de fixation selon l'invention,
- les figures 2 et 3 sont des vues schématiques d'une première forme de réalisation d'un bagage selon l'invention,
- la figure 4 est une vue schématique partielle représentant une partie du bagage des figures 2 et 3 fixé à la borne de la figure 1,
- la figure 5 est une vue schématique du bagage des figures 2 et 3 fixé à la borne de la figure 1,
- la figure 6 est une vue schématique d'un parc de bornes selon la première forme de réalisation,
- la figure 7 est une vue schématique d'une deuxième forme de réalisation d'une borne de fixation selon l'invention,
- la figure 8 est une vue schématique d'une deuxième forme de réalisation d'un bagage selon l'invention,
- la figure 9 est une vue schématique d'une troisième forme de réalisation d'un bagage selon l'invention,
- la figure 10 est une vue schématique du bagage de la figure 8 fixé à la borne de la figure 7 et
- la figure 11 est une vue schématique d'un parc de bornes selon la deuxième forme de réalisation.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

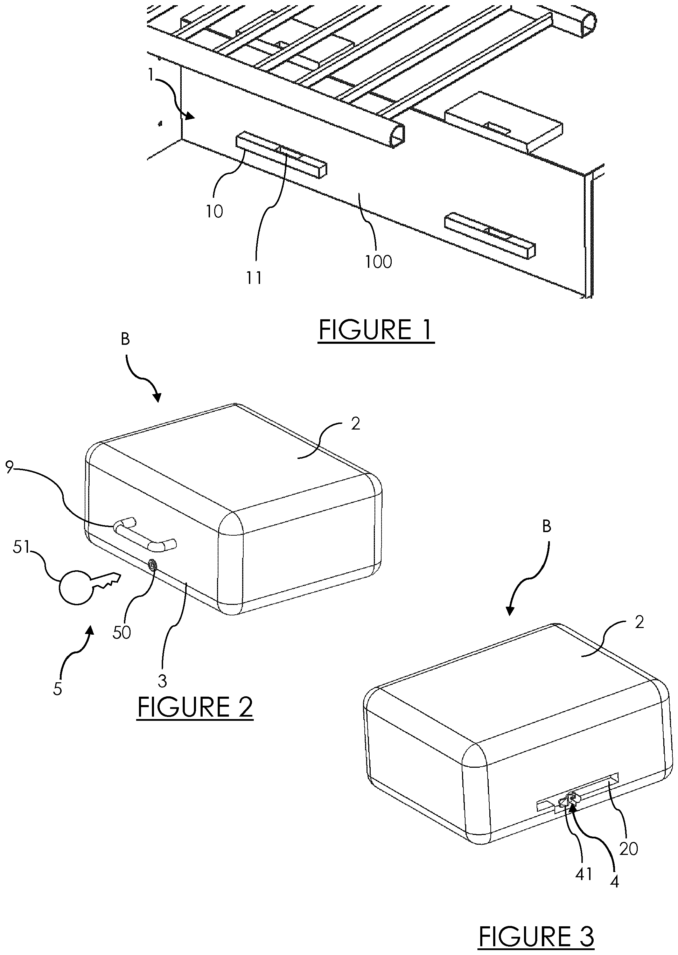

En référence à la figure 1, il est représenté une première forme de réalisation d'une borne de fixation 1 selon l'invention montée sur une paroi fixe 100 d'un véhicule ferroviaire. Dans cet exemple, la paroi fixe 100 est une paroi verticale, notamment d'une zone de stockage de bagages, de préférence de type case à bagages. Néanmoins, il va de soi que la borne 1 pourrait être montée dans tout équipement fixe, par exemple, un meuble fixe d'un véhicule ferroviaire.

Comme illustré à la figure 1, une borne de fixation 1 comprend un premier organe de fixation 1 adapté pour coopérer par emboitement avec un deuxième organe de fixation d'un bagage comme cela sera présenté par la suite. Dans cet exemple, le premier organe de fixation 10 s'étend en saillie depuis la paroi fixe 100. Dans cet exemple toujours, la paroi fixe 100 étant une paroi verticale, l'organe de fixation 10 s'étend horizontalement depuis la paroi fixe 100.

De préférence, le premier organe de fixation 10 possède une forme allongée s'étendant horizontalement selon sa longueur. En référence à la figure 1, le premier organe de fixation 10 possède une forme de parallélépipède rectangle mais il va de soi que d'autres formes pourraient également convenir, par exemple cylindrique, rhomboédrique, etc.

Dans cet exemple, le premier organe de fixation 10 comporte des moyens de blocage passif qui se présentent, à la figure 1, sous la forme d'un unique orifice traversant 11, de préférence s'étendant perpendiculairement à la longueur du premier organe de fixation 10. Néanmoins, il va de soi que les moyens de blocage pourraient comporter plusieurs orifices traversants, un ou plusieurs orifices borgnes, une ou plusieurs rainures, etc.

De manière alternative, le premier organe de fixation 10 pourrait également être rétractable afin de permettre son escamotage dans la paroi fixe 100.

En référence aux figures 2 et 3, il est représenté une première forme de réalisation d'un bagage B selon l'invention. Dans cet exemple, le bagage B possède des dimensions d'une valise mais il va de soi que l'invention s'applique à tout type de bagage.

Le bagage B comprend au moins un espace de rangement (non référencé) délimité par une paroi 2 et dans lequel un voyageur peut entreposer ses affaires, et un mécanisme d'ouverture/fermeture 3 permettant d'accéder audit espace de rangement. Dans cet exemple, le mécanisme d'ouverture/fermeture 3 se présente sous la forme d'une fermeture zippée mais il va de soi que d'autres mécanismes pourraient convenir.

Toujours en référence aux figures 2 et 3, le bagage B comprend un deuxième organe de fixation 20 qui se présente dans cet exemple sous la forme d'un logement adapté pour coopérer par complémentarité de formes avec le premier organe de fixation 10 de la borne de fixation 1 comme cela sera présenté par la suite. Le deuxième organe de fixation 20 est positionné, de préférence, sur une face arrière du bagage B. Lorsque le bagage B comporte une poignée 9 comme illustré à la figure 2, le deuxième organe de fixation 20 est positionné à l'opposé de la poignée 9 afin de permettre à un voyageur de retirer le bagage B de la borne de fixation 10 en tirant sur la poignée 9 lorsque le bagage B est déverrouillé de la borne de fixation 10.

Dans cette forme de réalisation, en référence aux figures 2 et 3, le deuxième organe de fixation 20 s'étend horizontalement.

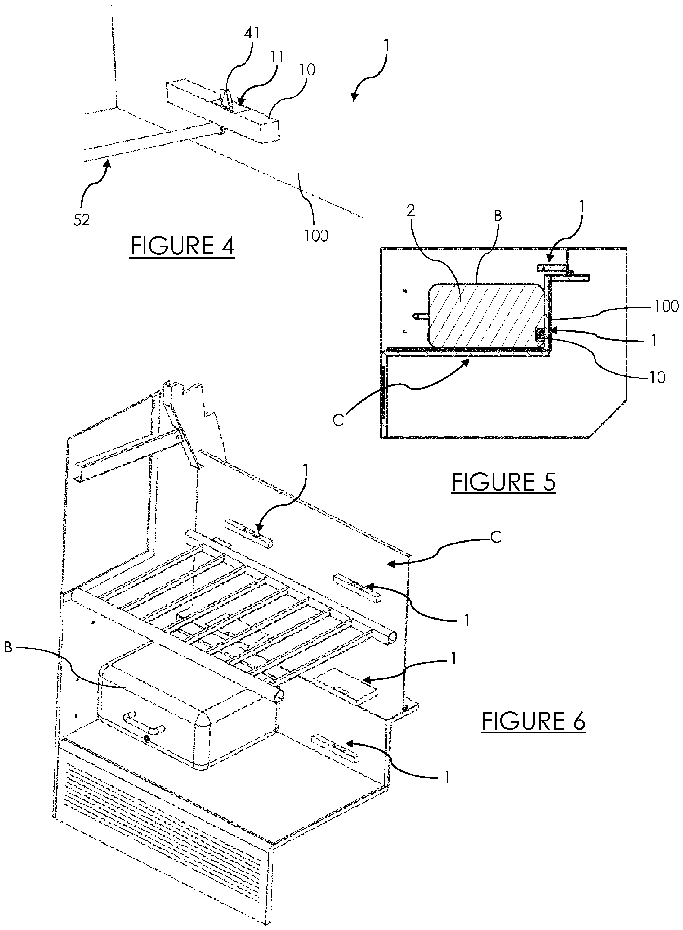

Dans cet exemple, le deuxième organe de fixation 20 comporte des moyens d'ancrage 4 comprenant un organe d'ancrage 41 adapté pour se déplacer dans la cavité du logement, dont le deuxième organe de fixation 20 a la forme, lorsqu'il est actionné. De préférence, l'organe d'ancrage 41 s'étend verticalement lorsqu'il est actionné, comme illustré à la figure 4, et horizontalement lorsqu'il n'est pas actionné, comme illustré à la figure 3. Un tel organe d'ancrage est ainsi actionné par rotation autour d'un axe horizontal. Dans cet exemple, l'organe d'ancrage 41 se présente sous la forme d'un loquet. Le loquet est situé dans le logement du deuxième organe de fixation 20 afin de ne pas dépasser du bagage B et ainsi éviter qu'il ne soit endommagé.

Toujours en référence aux figures 2 et 3, le bagage B comporte en outre un actionneur de commande 5 adapté pour actionner les moyens d'ancrage 4 du deuxième organe de fixation 2. L'actionneur de commande 5 est, de préférence, positionné sur une face du bagage B qui est différente de celle sur laquelle est positionné le deuxième organe de fixation 20. Dans ce cas, l'actionneur de commande 5 est relié de manière mécanique auxdits moyens d'ancrage 4, en particulier, au moyen d'un axe rotatif 52 représenté à la figure 4 sans la paroi 2 du bagage B. L'organe d'ancrage 41 est ainsi actionné en rotation autour de l'axe horizontal de l'axe rotatif 52. De préférence, un tel axe 52 est monté du côté de la surface intérieure de la paroi 2 délimitant l'espace de rangement du bagage B.

L'actionneur de commande 5 comporte ici une serrure de commande 50 associée à une clé de commande 51 comme illustré à la figure 2. Ainsi, lorsque le voyageur tourne la clé de commande 51 dans la serrure de commande 50, le loquet est entraîné en rotation de manière à entrer dans la cavité du logement. Il va de soi que l'actionneur de commande 5 pourrait posséder une forme différente.

Le mécanisme d'ouverture/fermeture 3 comporte en outre des moyens de verrouillage comme cela sera présenté par la suite.

En référence aux figures 4 et 5, pour fixer un bagage B à une borne de fixation 1, il suffit à un voyageur de glisser son bagage B sur une case à bagages C jusqu'à la borne 1 de manière à ce que le premier organe de fixation 10 de la borne 1 coopère par complémentarité de formes avec le deuxième organe de fixation 20 du bagage B. Ensuite, il suffit au voyageur d'actionner les moyens d'ancrage 4, par exemple en tournant la clé de commande 51 dans la serrure de commande 50 afin que l'organe d'ancrage 41 se déplace, grâce à l'axe rotatif 52, dans les moyens de blocage de la borne 1 qui sont passifs.

Ainsi, si un tiers essaye de voler le bagage B, ce dernier est retenu sur la borne de fixation 1. De manière analogue, pour libérer le bagage B, il suffit au voyageur de rétracter l'organe d'ancrage 41 en introduisant de nouveau la clé de commande 51 dans la serrure de commande 50.

L'invention concerne également un parc de bornes de fixation 1 pour recevoir une pluralité de bagages B selon l'invention comme illustré à la figure 6. Le positionnement des bornes 1 est optimisé pour limiter l'encombrement des bagages B.

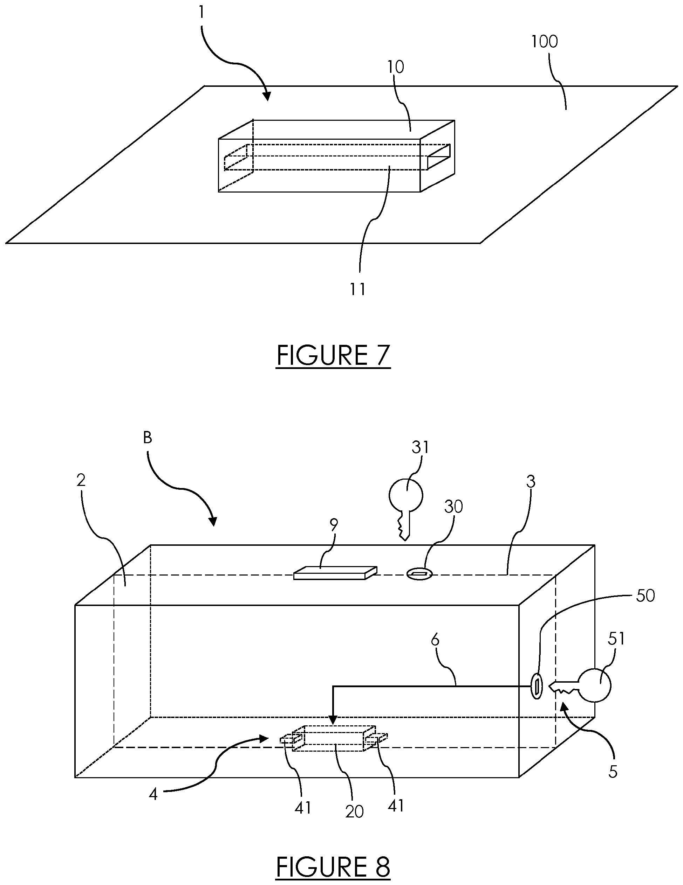

Selon une deuxième forme de réalisation selon l'invention illustrée aux figures 7 à 11, l'orifice traversant 11 s'étend selon la longueur du premier organe de fixation 10 et débouche aux extrémités latérales dudit premier organe de fixation 10.

Dans cet exemple, les moyens d'ancrage 4 comprennent alors deux organes d'ancrage 41 adaptés pour s'étendre en saillie dans la cavité du logement, dont le deuxième organe de fixation 20 a la forme, lorsqu'il est actionné. De préférence, les organes d'ancrage 41 s'étendent horizontalement en saillie. Il va de soi que les moyens d'ancrage 4 pourraient comprendre un nombre différent d'organes d'ancrage 41, en particulier, un unique ou plus de deux. Les organes d'ancrage 41 se présentent ici sous la forme de lames montées en translation horizontale.

Comme illustré à la figure 8, l'actionneur de commande 5 pourrait être relié aux moyens d'ancrage 4 au moyen de câbles 6. De préférence, lesdits câbles 6 sont montés du côté de la surface intérieure de la paroi 2 délimitant l'espace de rangement du bagage B.

De manière alternative, les moyens d'ancrage du bagage B pourrait être magnétiques, notamment en comprenant une embase magnétique. La paroi fixe 100 de la borne de fixation 10 comprend alors une tôle comprenant de l'acier afin de fixer le bagage B sur la borne de fixation par aimantation en actionnant les moyens d'ancrage magnétique. Les moyens d'ancrage magnétique sont désactivés pour déverrouiller le bagage B de la borne de fixation 1.

De manière alternative encore, le premier organe de fixation 10 se présente sous la forme d'une barre sur laquelle peut coopérer une boucle du deuxième organe de fixation 20. Le deuxième organe de fixation 20 comporte une boucle, par exemple une chaine, une élingue ou analogue, afin de pouvoir se glisser autour de la barre du premier organe de commande 10 de la borne de fixation 1. De manière préférée, l'actionneur de commande 5 est configuré pour modifier la circonférence de la boucle de manière à permettre son serrage/desserrage. A titre d'exemple, pour une boucle formée d'un câble métallique, l'actionneur de commande 5 peut comporter un enrouleur pour régler la longueur du câble métallique et donc la dimension de la boucle. Ainsi, le voyageur peut agir directement sur son bagage pour le verrouiller à la borne de fixation 1.

En référence à la figure 8, le mécanisme d'ouverture/fermeture 3 comporte en outre des moyens de verrouillage, en particulier un cadenas 30 apte à être ouvert par une clé de verrouillage 31. Il va de soi que l'invention s'applique à d'autres moyens de verrouillage, notamment, un cadenas à code.

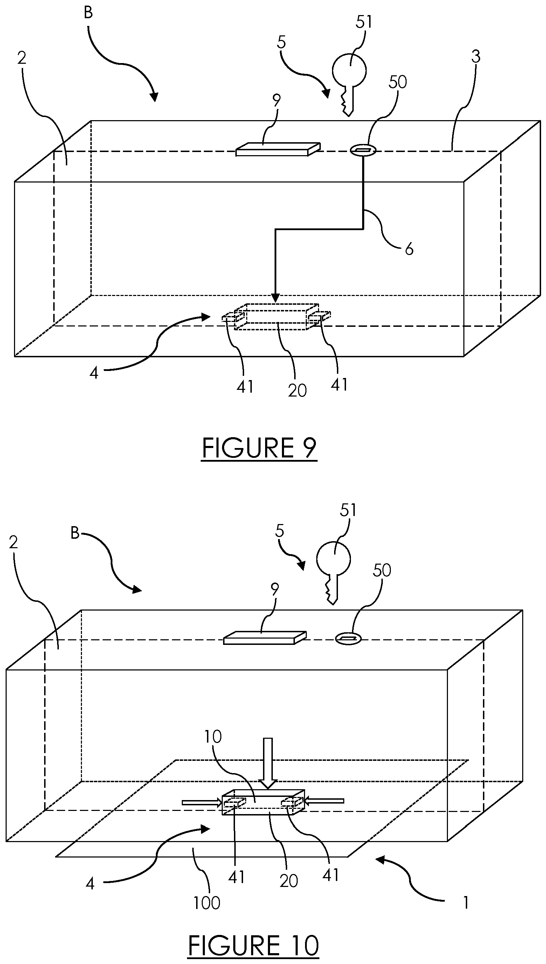

Dans la forme de réalisation du bagage de la figure 8, les moyens de verrouillage sont distincts de l'actionneur de commande 5. Néanmoins, les moyens de verrouillage pourraient également être intégrés à l'actionneur de commande 5 comme illustré à la figure 9. A cet effet, l'actionneur de commande 5 est configuré pour simultanément verrouiller le mécanisme d'ouverture/fermeture 3 et actionner les moyens d'ancrage 4. Il va de soi que cette caractéristique s'applique à toute forme de réalisation de l'invention.

Comme illustré aux figures 7 à 11, la paroi fixe 100 peut être une paroi horizontale, notamment un plancher. L'organe de fixation 10 s'étend alors verticalement de manière à permettre en emboîtement aisé par gravité. Le deuxième organe de fixation 20 est positionné sur une face inférieure du bagage B afin de permettre à un voyageur de déposer le bagage B sur la borne de fixation 1 tout en le maintenant par sa poignée 9.

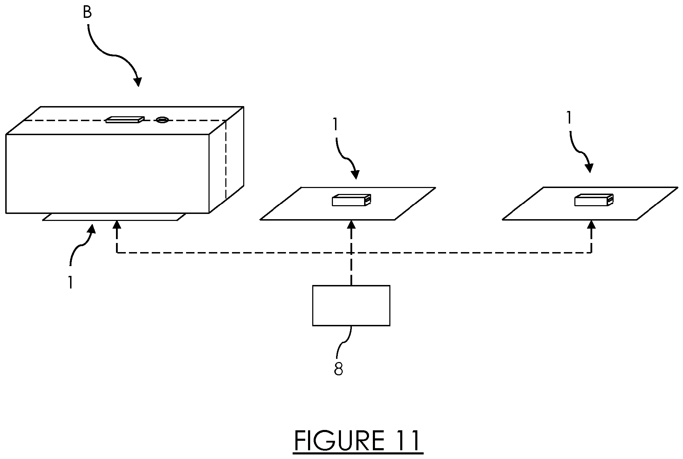

Selon un autre aspect de l'invention, le premier organe de fixation 10 peut comporter deux mâchoires articulées afin de permettre une libération d'un bagage, en cas d'urgence, en l'absence de son propriétaire. Comme illustré à la figure 11, les bornes de fixation 1 peuvent être reliées à un module de déverrouillage 8, en particulier de manière mécanique, afin de libérer de manière centralisée tous les bagages B fixés auxdites bornes 1. A titre d'exemple, lorsque chaque borne de fixation 1 comporte des mâchoires articulées, le module de déverrouillage 8 peut comporter un arbre rotatif, reliant l'axe d'articulation desdites mâchoires, qui est adapté pour ouvrir l'ensemble des bornes 1 et ainsi libérer les bagages B en l'absence des voyageurs. Un tel module ce déverrouillage 8 permet avantageusement, à l'exploitant du parc de bornes de fixation, de retirer les bagages B en cas d'urgence.

Il a été présenté un bagage B fixé à une unique borne de fixation 1, cependant, selon la taille du bagage B, ce dernier pourrait être fixé à une pluralité de bornes de fixation 1. En particulier, le bagage B pourrait être fixé, dans une case à bagages C, à deux bornes de fixation 1 situées l'une au-dessus de l'autre (comme illustré à la figure 5) lorsque le bagage B présente une hauteur importante, ou bien à deux bornes de fixation 1 situées l'une à côté de l'autre lorsque le bagage B présente une largeur importante, ou bien encore à quatre bornes de fixation lorsque le bagage B présente des dimensions importantes. Dans ce cas, l'actionneur de commande 5 est adapté pour actionner de manière simultanée les moyens d'ancrage 4 dans chaque borne de fixation 1.

Il a été présenté un bagage dont l'axe 52 et/ou les câbles 6 sont montés du côté de la surface intérieure de la paroi 2 délimitant l'espace de rangement du bagage B. Il va de soi que l'axe 52 et/ou les câbles 6 pourraient être montés à l'intérieur d'une paroi épaisse que comprendrait le bagage B, de manière à ne pas être accessibles par son propriétaire.

Il a été présenté un premier organe de fixation 10 du type « mâle » et un deuxième organe de fixation 20 de type « femelle » mais il va de soi que l'inverse est également possible.

Si le deuxième organe de fixation 20 du bagage B est du type mâle, le deuxième organe de fixation 20 est de préférence rétractable de manière à ce que la surface inférieure du bagage B demeure plane lorsqu'il est posé à terre.

Il a été présenté une borne de fixation 1 dans un véhicule ferroviaire mais la borne de fixation 1 pourrait être montée dans tout véhicule de transport, notamment, un bus, un avion, etc. De même, une telle borne de fixation 1 pourrait être montée dans tout lieu de transport, par exemple, une gare, un aéroport, etc.

## Revendications

1. Bagage (B) comprenant au moins un espace de rangement, un mécanisme d'ouverture/fermeture (3) permettant d'accéder audit espace de rangement et un organe de fixation (20), dit deuxième organe de fixation, adapté pour coopérer avec un organe de fixation (10), dit premier organe de fixation, d'une borne de fixation (1), le deuxième organe de fixation (20) comprenant des moyens d'ancrage actif (4) adaptés pour coopérer avec des moyens de blocage passif du premier organe de fixation (10) de la borne de fixation (1).

2. Bagage (B) selon la revendication précédente, dans lequel le deuxième organe de fixation (20) se présente sous la forme d'un logement définissant une cavité d'emboitement.

3. Bagage (B) selon la revendication précédente, dans lequel les moyens d'ancrage (4) comportent au moins un organe d'ancrage (41) apte à se déplacer dans ladite cavité.

4. Bagage (B) selon l'une des revendications 2 à 3, dans lequel l'organe d'ancrage (41) est apte à se déplacer dans la cavité par rotation.

5. Bagage (B) selon l'une des revendications précédentes, dans lequel le deuxième organe de fixation (20) est situé sur une face inférieure du bagage (B).

6. Bagage (B) selon l'une des revendications précédentes, comprenant un actionneur de commande (5) configuré pour commander les moyens d'ancrage (4).

7. Bagage (B) selon la revendication précédente, dans lequel l'actionneur de commande (5) est configuré pour verrouiller le mécanisme d'ouverture/fermeture (3).

8. Ensemble comprenant au moins un bagage (B) selon l'une des revendications 1 à 7 et au moins une borne de fixation (1) dudit bagage (B), en particulier pour un véhicule de transport, comprenant un premier organe de fixation (10), monté solidairement à un élément fixe et adapté pour coopérer avec le deuxième organe de fixation (20) du bagage (B), ledit premier organe de fixation (10) comprenant des moyens de blocage passif adaptés pour coopérer avec les moyens d'ancrage actif (4) du deuxième organe de fixation (20) du bagage (B).

9. Ensemble selon la revendication précédente, dans lequel le premier organe de fixation (10) de la borne de fixation (1) est adapté pour coopérer par emboitement avec le deuxième organe de fixation (20) du bagage (B).

10. Ensemble selon l'une des revendications 8 à 9, dans laquelle le premier organe de fixation (10) est rétractable.

11. Ensemble selon l'une des revendications 8 à 10, dans laquelle les moyens de blocage comportent au moins un orifice de fixation (11), de préférence, traversant.

12. Ensemble selon l'une des revendications 8 à 11, dans lequel le premier organe de fixation (10) comporte des moyens de libération configurés pour empêcher l'action des moyens de blocage passif de manière à permettre le retrait d'un bagage (B) verrouillé sur une borne de fixation (1).

## Patentansprüche

1. Gepäck (B), umfassend mindestens einen Verstauraum, einen Öffnungs-/Schließmechanismus (3), der den Zugriff auf den Verstauraum erlaubt und ein Befestigungsorgan (20), genannt zweites Befestigungsorgan, das zum Zusammenwirken mit einem Befestigungsorgan (10), genannt erstes Befestigungsorgan, einer Befestigungsklemme (1) geeignet ist, wobei das zweite Befestigungsorgan (20) aktive Verankerungsmittel (4) umfasst, die zum Zusammenwirken mit passiven Blockiermitteln des ersten Befestigungsorgans (10) der Befestigungsklemme (1) geeignet sind.

2. Gepäck (B) nach vorangehendem Anspruch, wobei das zweite Befestigungsorgan (20) in Form einer Aufnahme vorliegt, die einen Rasthohlraum definiert.

3. Gepäck (B) nach vorangehendem Anspruch, wobei die Verankerungsmittel (4) mindestens ein Verankerungsorgan (41) aufweisen, das imstande ist, sich in dem Hohlraum zu verlagern.

4. Gepäck (B) nach einem der Ansprüche 2 bis 3, wobei das Verankerungsorgan (41) imstande ist, sich in dem Hohlraum durch Rotation zu verlagern.

5. Gepäck (B) nach einem der vorangehenden Ansprüche, wobei sich das zweite Befestigungsorgan (20) auf einer inneren Fläche des Gepäcks (B) befindet.

6. Gepäck (B) nach einem der vorangehenden Ansprüche, umfassend einen Steueraktuator (5), der konfiguriert ist, um die Verankerungsmittel (4) zu steuern.

7. Gepäck (B) nach vorangehendem Anspruch, wobei der Steueraktuator (5) konfiguriert ist, um den Öffnungs-/Schließmechanismus (3) zu verriegeln.

8. Anordnung, umfassend mindestens ein Gepäck (B) nach einem der Ansprüche 1 bis 7 und mindestens eine Befestigungsklemme (1) des Gepäcks (B), insbesondere für ein Transportfahrzeug, umfassend ein erstes Befestigungsorgan (10), das an einem festen Element fest angebracht ist und zum Zusammenwirken mit dem zweiten Befestigungsorgan (20) des Gepäcks (B) geeignet ist, wobei das erste Befestigungsorgan (10) passive Blockiermittel umfasst, die zum Zusammenwirken mit den aktiven Verankerungsmitteln (4) des zweiten Befestigungsorgans (20) des Gepäcks (B) geeignet sind.

9. Anordnung nach vorangehendem Anspruch, wobei das erste Befestigungsorgan (10) der Befestigungsklemme (1) zum Zusammenwirken durch Rasten mit dem zweiten Befestigungsorgan (20) des Gepäcks (B) geeignet ist.

10. Anordnung nach einem der Ansprüche 8 bis 9, wobei das erste Befestigungsorgan (10) zurückziehbar ist.

11. Anordnung nach einem der Ansprüche 8 bis 10, wobei die Blockiermittel mindestens eine, vorzugweise durchgehende, Befestigungsöffnung (11) aufweisen.

12. Anordnung nach einem der Ansprüche 8 bis 11, wobei das erste Befestigungsorgan (10) Freigabemittel aufweist, die konfiguriert sind, um das Wirken der passiven Blockiermittel derart zu vermeiden, dass die Wegnahme eines auf einer Befestigungsklemme (1) verriegelten Gepäcks (B) ermöglicht wird.

## Claims

1. A piece of luggage (B) comprising at least one storage space, an opening/closing mechanism (3) for accessing said storage space and an attachment member (20), called second attachment member, adapted to cooperate with an attachment member (10), called first attachment member, of an attachment terminal (1), the second attachment member (20) comprising active anchoring means (4) adapted to cooperate with passive blocking means for passively blocking the first attachment member (10) of the attachment terminal (1).

2. The piece of luggage (B) according to the preceding claim, wherein the second attachment member (20) is in the form of a housing defining a nesting cavity.

3. The piece of luggage (B) according to the preceding claim, wherein the anchoring means (4) comprise at least one anchoring member (41) able to be moved in said cavity.

4. The piece of luggage (B) according to one of claims 2 and 3, wherein the anchoring member (41) is able to be rotatably moved in the cavity.

5. The piece of luggage (B) according to one of the preceding claims, wherein the second attachment member (20) is located on a lower face of the piece of luggage (B).

6. The piece of luggage (B) according to one of the preceding claims, comprising a control actuator (5) configured to control the anchoring means (4).

7. The piece of luggage (B) according to the preceding claim, wherein the control actuator (5) is configured to lock the opening/closing mechanism (3).

8. An assembly comprising at least one piece of luggage (B) according to one of claims 1 to 7 and at least one attachment terminal (1) for attaching said piece of luggage (B), in particular for a transport vehicle, comprising a first attachment member (10), mounted integral with a fixed element and adapted to cooperate with the second attachment member (20) for attaching the piece of luggage (B), said first attachment member (10) comprising passive blocking means adapted to cooperate with the active anchoring means (4) for actively anchoring the second attachment member (20) of the piece of luggage (B).

9. The assembly according to the preceding claim, wherein the first attachment member (10) of the attachment terminal (1) is adapted to cooperate by fitting with the second attachment member (20) of the piece of luggage (B).

10. The assembly according to one of claims 8 and 9, wherein the first attachment member (10) is retractable.

11. The assembly according to one of claims 8 to 10, wherein the blocking means comprise at least one, preferably through, attachment port (11).

12. The assembly according to one of claims 8 to 11, wherein the first attachment member (10) comprises release means configured to prevent the action of the passive blocking means so as to enable a piece of luggage (B) locked to an attachment terminal (1) to be withdrawn.
